# FASCICULE DE BREVET EUROPEEN

(11) **EP 3 631 960 B1**
(45) Date de publication et mention de la délivrance du brevet: **12.03.2025**
(21) Numéro de dépôt: 18724268.0
(22) Date de dépôt: 18.05.2018
(51) Int. Cl.: H02M 3/155

(54) **CONVERTISSEUR A PLAGES DE TENSION DE SORTIE SELECTIONNABLES**
UMRICHTER MIT WÄHLBAREN AUSGANGSSPANNUNGSBEREICHEN
CONVERTER WITH SELECTABLE OUTPUT VOLTAGE RANGES

(30) Priorité: 22.05.2017 FR 1754514
(43) Date de publication de la demande: 08.04.2020
(73) Titulaire: Valeo Vision, 93012 Bobigny Cedex (FR)
(72) Inventeur: BOUDIKIAN, David, 93012 Bobigny Cedex (FR); ALVES, Jean-Philippe, 93012 Bobigny Cedex (FR); JAUREGI, Irantzu, 93012 Bobigny Cedex (FR); LIANG, Jintao-Lita, Foshan Guangdong 528000 (CN)
(74) Mandataire: Valeo Visibility
(86) Numéro de dépôt international: PCT/EP2018/063201
(87) Numéro de publication internationale: WO 2018/215368

(56) Documents cités:
- WO-A2-2004/006037
- WO-A2-2006/053104
- US-A- 5 781 000
- US-B1- 6 373 725
- BIANCHIN CARLOS GABRIEL ET AL: "High-Power-Factor Rectifier Using the Modified SEPIC Converter Operating in Discontinuous Conduction Mode", IEEE TRANSACTIONS ON POWER ELECTRONICS, INSTITUTE OF ELECTRICAL AND ELECTRONICS ENGINEERS, USA, vol. 30, no. 8, 1 August 2015 (2015-08-01), pages 4349 - 4364, XP011574722, ISSN: 0885-8993, [retrieved on 20150305], DOI: 10.1109/TPEL.2014.2360172

## Description

L'invention se rapporte aux convertisseurs électriques. En particulier, l'invention concerne un convertisseur apte à générer des tensions de sorties sur une plage de valeurs étendue, ce qui est avantageux notamment dans le cadre de modules lumineux pour véhicules automobiles intégrant une pluralité de sources lumineuses, par exemple de type diode électroluminescente, LED.

Il devient de plus en plus courant d'utiliser des sources lumineuses à élément semi-conducteur, telles que des diodes électroluminescentes, LEDs, pour réaliser différentes fonctions lumineuses d'un véhicule automobile. Ces fonctions peuvent par exemple inclure les feux diurnes, les feux de position, les indicateurs de direction ou les feux de croisement. De manière connue, un dispositif de pilotage de l'alimentation électrique est nécessaire pour alimenter un groupe de LEDs réalisant une fonction lumineuse donnée. Un tel dispositif de pilotage comprend en général un convertisseur de tension qui, à partir d'une tension continue d'entrée fournie par une source interne au véhicule, telle qu'une batterie, est apte à générer une tension de sortie de valeur appropriée à l'alimentation du groupe de LEDs. Une LED émet de la lumière lorsqu'une tension d'au moins une valeur seuil, appelée tension directe, est appliquée à ses bornes. L'intensité du flux lumineux émis par une LED augmente en général avec l'intensité moyenne du courant électrique qui la traverse, au-delà de la valeur seuil du courant direct.

Des convertisseurs connus comprennent des convertisseurs de type SEPIC (de l'anglais « Single-Ended Primary Inductor Converter »), Flyback, élévateur de tension (« boost ») ou abaisseur de tension (« buck »). De tels convertisseurs font intervenir un élément interrupteur, tel qu'un transistor, dont l'état est périodiquement commuté entre les valeurs ouvertes et fermées. Le rapport cyclique de fermeture D de l'interrupteur influence la valeur de la tension de sortie et la valeur moyenne du courant de sortie. Pour l'exemple d'un convertisseur de type SEPIC, la tension de sortie V_{OUT} est égale à V_{IN} multipliée par le rapport D/(1-D).

La tension d'entrée V_{IN} pour de tels convertisseurs au sein d'un véhicule automobile qui constitue un système autonome et fermé est typiquement limitée entre 6V et 20V. Ceci implique des limitations intrinsèques en ce qui concerne les valeurs de tensions de sortie réalisables à l'aide de convertisseurs d'architectures connues. Dans l'exemple d'un convertisseur de type SEPIC, pour une tension minimale de 6V en entrée et un rapport cyclique Dₘₐₓ de 0.9, la tension de sortie maximale pour l'alimentation de sources lumineuses est limitée vers le haut à 54V. De même, pour une tension maximale de 20V en entrée et un rapport cyclique Dₘᵢₙ de 0.2, la tension de sortie minimale du convertisseur est limitée vers le bas à 5V.

Cependant, afin de réaliser des fonctions lumineuses de plus en plus complexes ou des signatures optiques particulières, il devient nécessaire d'alimenter un nombre important de LEDs, le nombre pouvant être variable selon la fonction lumineuse allumée, en utilisant les mêmes moyens de pilotage. Les valeurs de tensions directes nécessaires au sein de modules lumineux pour véhicules automobiles, afin de garantir l'alimentation électrique des LEDs impliquées, peut dépasser la plage de tensions de sortie disponible en utilisant les architectures de convertisseurs connues dans l'art.

Le brevet US 5781000 A décrit un convertisseur permettant de choisir parmi deux tensions d'entrée pour fournir une tension correspondante. Un tel montage nécessite l'établissement de deux tensions de référence, ce qui est encombrant, cher et peu efficient en termes d'électricité.

Le brevet US 6373725 B1 décrit un convertisseur de type SEPIC comportant un interrupteur permettant de sélectionner entre une topologie de type SEPIC et une topologie de type BOOST.

La publication "High Power Factor rectifier Using the Modified SEPIC Converter Operating in Discontinuous Conduction Mode" (IEEE Transactions on power electronics, vol. 30, no. 8, August 2015) décrit un SEPIC modifié pour fournir une tension plus importante, sans interrupteur permettant de changer de topologie de convertisseur.

L'invention a pour objectif de pallier à au moins un des problèmes posés par l'art antérieur. Plus précisément, l'invention a pour objectif de proposer un convertisseur qui puisse fournir de manière sélective des valeurs de tension de sortie qui dépassent les valeurs de tension de sortie réalisables à l'aide d'architectures de convertisseurs connues.

L'invention a pour objet un convertisseur destiné à convertir une tension électrique d'entrée de manière sélective en au moins une première et une deuxième tension électrique de sortie différentes, le convertisseur comprenant un montage de sélection configuré pour basculer entre l'utilisation d'un premier et d'au moins un deuxième circuit électronique, les premier et deuxième circuits électroniques permettant de fournir respectivement la première et deuxième tension électrique de sortie, le premier circuit électronique comprenant un terminal d'entrée, une première inductance reliant le terminal d'entrée à un premier nœud, une première capacité dont les terminaux relient le premier nœud à un deuxième nœud, une première diode dont l'anode est connectée au deuxième nœud et la cathode est reliée à un troisième nœud, le troisième nœud étant relié à un terminal de sortie du convertisseur, un premier interrupteur reliant le premier nœud à la masse, une deuxième inductance reliant le deuxième nœud à la masse via le montage de sélection, et une deuxième capacité reliant le troisième nœud à la masse, caractérisé en ce que le deuxième circuit électronique comprend le premier circuit électronique, et comprenant en outre un quatrième nœud situé entre la deuxième inductance et la masse, ainsi qu'une deuxième diode dont l'anode est connectée au premier nœud et la cathode est reliée au quatrième nœud, ainsi qu'une troisième capacité reliant le quatrième nœud à la masse.

Le montage de sélection peut de préférence comprendre au moins un interrupteur. L'interrupteur peut de préférence comprendre un transistor, par exemple un transistor à effet de champ, MOSFET (« Metal-Oxide Semiconductor Field-Effect Transistor »).

De manière préférée, le premier circuit électronique peut être un circuit de type SEPIC (« Single Ended Primary Inductor Convertor ») et le deuxième circuit électronique peut être un circuit de type SEPIC boosté.

Le premier interrupteur Q1 peut préférentiellement être un transistor, notamment un transistor à effet de champ, dont le rapport cyclique de fermeture a un impact sur la valeur de la tension électrique de sortie du convertisseur.

Le montage de sélection peut de manière préférée être apte à brancher et débrancher de manière sélective la deuxième diode D2 et la troisième capacité C3.

De manière préférentielle, le montage de sélection peut comprendre un premier interrupteur de sélection disposé entre le premier nœud et l'anode de la deuxième diode D2, ainsi qu'un deuxième interrupteur de sélection monté en parallèle à la troisième capacité C3 et reliant le nœud N4 à la masse.

Le premier circuit électronique peut de préférence être apte à générer une tension de sortie comprise entre 5 et 55 V, et le deuxième circuit électronique peut de préférence être apte à générer une tension de sortie comprise entre 30 et 114 V, pour une tension d'entrée comprise entre 6 et 20 V.

L'invention a également pour objet un dispositif de pilotage de l'alimentation électrique d'au moins une source lumineuse à élément semi-conducteur. Le dispositif de pilotage est remarquable en ce qu'il comprend un convertisseur conforme à la présente invention et une unité de commande configurée pour commander le montage de sélection du convertisseur en fonction du niveau de tension requis pour l'alimentation des sources lumineuses.

De préférence, les sources lumineuses peuvent comprendre des diodes électroluminescentes, LED.

L'unité de commande du dispositif de pilotage peut de préférence comprendre un élément microcontrôleur.

Si le convertisseur comprend un interrupteur dont le rapport cyclique de fermeture a un impact sur la valeur de la tension électrique de sortie du convertisseur, l'unité de commande peut en outre être configurée pour imposer un rapport cyclique audit interrupteur.

L'invention a également pour objet de proposer un véhicule automobile comprenant au moins un module lumineux, le module lumineux comprenant un dispositif de pilotage de l'alimentation électrique d'au moins une source lumineuse à élément semi-conducteur. Le véhicule automobile est remarquable en ce que le dispositif de pilotage de l'alimentation électrique des sources lumineuses est conforme au dispositif de pilotage selon la présente invention.

En utilisant les mesures proposées par la présente invention, il devient possible de proposer un convertisseur qui soit apte à réaliser de manière sélective des valeurs de tension de sortie sur une plage de tensions dépassant celles réalisables à l'aide d'architectures de convertisseurs connues. Le dispositif selon l'invention permet de basculer entre au moins deux circuits électroniques, chacun des circuits électroniques réalisant un circuit convertisseur. Les circuits électroniques se partagent entre eux au moins une partie de leurs composants électroniques constituants. De cette façon, l'invention permet de réduire les coûts de production par rapport à l'utilisation d'une pluralité de convertisseurs complètement disjoints pour réaliser une pluralité de plages de tensions de sortie. Il en découle également une réduction de l'espace requis pour réaliser le convertisseur selon l'invention, comparé à l'utilisation de convertisseurs dédiés pour réaliser une fonctionnalité équivalente. Dans un mode de réalisation préféré de l'invention, un convertisseur intègre une architecture de type SEPIC ainsi qu'une architecture de type SEPIC boosté, comprenant intégralement les composants électroniques de l'architecture de type SEPIC. En mode SEPIC boosté, le convertisseur est notamment apte à réaliser des tensions de sortie allant de 30V jusqu'à 114 V, cette dernière valeur étant par exemple réalisée pour une tension d'entrée de 6V et un rapport cyclique de fermeture de 0.9. En mode SEPIC, le convertisseur permet de réaliser des tensions de sortie comprises entre 5V et 54V. En utilisant l'invention, une plage de valeurs allant de 5V jusqu'à 114V devient donc disponible à partir de valeurs de tension d'entrée typiquement disponibles au sein d'un véhicule automobile. Ceci augmente la flexibilité de conception de modules lumineux pour véhicules automobiles, en particulier de modules lumineux réalisant une pluralité de fonctions lumineuses moyennant une pluralité de sources lumineuses de type LED. Le nombre de LEDs pouvant être pilotés par un même dispositif de pilotage intégrant le convertisseur selon l'invention est notamment augmenté par rapport à des solutions à convertisseurs uniques, peu onéreuses et simples à réaliser connues dans l'art.

D'autres caractéristiques et avantages de la présente invention seront mieux compris à l'aide de la description exemplaire et des dessins parmi lesquels :
- la figure 1 montre de manière schématisée un convertisseur selon un mode de réalisation préféré de l'invention ;
- la figure 2 montre un schéma de montage d'un convertisseur de type SEPIC connu de l'art antérieur ;
- la figure 3 montre un schéma de montage d'un convertisseur de type SEPIC boosté connu de l'art antérieur ;
- la figure 4 montre un schéma de montage d'un convertisseur selon un mode de réalisation préféré de l'invention, intégrant un convertisseur de type SEPIC et un convertisseur de type SEPIC boosté ;
- la figure 5 montre de manière schématisée un dispositif d'alimentation électrique d'une pluralité de sources lumineuses de type LED selon un mode de réalisation préféré de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif. Des numéros de référence similaires seront utilisés pour décrire des concepts semblables à travers différents modes de réalisation de l'invention. Par exemple, les références 100 et 200 désignent deux modes de réalisation d'un convertisseur selon l'invention.

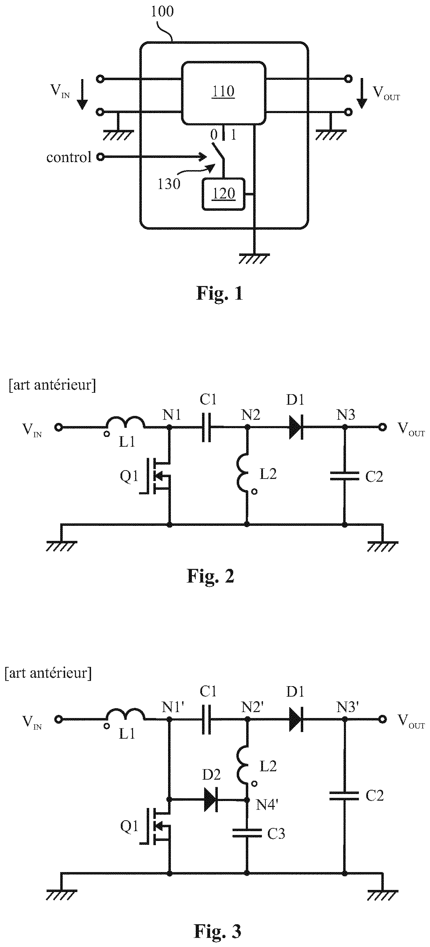

Le schéma de la figure 1 montre un convertisseur 100 selon un premier mode de réalisation de l'invention. Le convertisseur comprend un premier circuit électronique 110 qui réalise un premier circuit convertisseur apte à convertir la tension électrique d'entrée V_{IN} en une tension de sortie V_{OUT}(110), différente de V_{IN}. Le premier circuit électronique 110 comprend un montage d'un premier ensemble de composants électroniques. Le convertisseur 100 comprend également un deuxième ensemble de composants électroniques 120, ainsi qu'un montage de sélection 130 illustré de manière schématisée par un simple interrupteur commandé par le signal « control ». Lorsque le signal de commande est égal à 0, l'interrupteur du montage de sélection 130 est ouvert et le convertisseur 100 est apte à fournir la tension de sortie V_{OUT}(110), tel qu'il vient d'être décrit. Lorsque le signal de commande est égal à 1, l'interrupteur du montage de sélection 130 est fermé. Dans ce cas, la combinaison du premier circuit électronique 110 avec les composants électroniques 120 réalise un deuxième circuit convertisseur, différent du circuit 110, et apte à convertir la tension électrique d'entrée V_{IN} en une tension de sortie V_{OUT}(110,120), différente de V_{IN}. Lors du branchage en combinaison, les composants électroniques du deuxième ensemble de composants électroniques 120 sont intégrés fonctionnellement à des emplacements précis et prédéterminés du schéma de montage du premier circuit 110. Optionnellement, un ou plusieurs composants électroniques faisant partie du montage du premier circuit électronique peuvent être débranchés de manière prédéterminée lorsque la combinaison du premier circuit électronique avec les composants électroniques 120 est activée moyennant le montage de sélection 130. Il va de soi que le même principe de combinaison de circuits / composants électroniques peut être étendu à une pluralité plus importante de circuits électroniques sans pour autant sortir du cadre de la présente invention. De cette façon, le montage de sélection 130 permettra de choisir entre une pluralité plus importante de circuits convertisseurs aptes à générer une pluralité de tensions ou plages de tensions de sortie.

La figure 2 illustre le schéma de montage d'un convertisseur à découpage de type SEPIC en soi connu dans l'art. Le circuit électronique correspondant comprend un terminal d'entrée auquel une tension d'entrée V_{IN} est appliquée. Une première inductance L1 relie le terminal d'entrée à un premier nœud N1.

Les terminaux d'une première capacité C1 relient le premier nœud N1 à un deuxième nœud N2. Le circuit électronique comprend une première diode D1 dont l'anode est connectée au deuxième nœud N2 et la cathode est reliée à un troisième nœud, le troisième nœud étant relié à un terminal de sortie du convertisseur. Un premier interrupteur Q1, illustré à titre exemplaire par un transistor, relie le premier nœud N1 à la masse, une deuxième inductance L2 relie le nœud N2 à la masse, et une deuxième capacité C2 relie le troisième nœud N3 à la masse. Le fonctionnement du montage de la figure 2 est en soi connu dans l'art et ne sera pas décrit en détails dans le cadre de la description de la présente invention. Le rapport cyclique de fermeture de l'interrupteur Q1 influe sur la valeur de la tension de sortie V_{OUT}. En variant la fréquence et les durées des phases d'ouverture/fermeture du signal de commande de l'interrupteur Q1, il est possible de varier la valeur de la tension de sortie. De manière générale, la valeur de tension de sortie est une fonction du rapport cyclique de fermeture D de l'interrupteur Q1 :
V_{OUT} = V_{IN} (D/(1-D)). Pour D=0.2 et V_{IN}=20V, V_{OUT} est égale à 5V. Pour D=0.9 et V_{IN}=6V, V_{OUT} est égale à 54V. Des valeurs intermédiaires entre ses valeurs extrêmes sont également réalisables.

La figure 3 illustre le schéma de montage d'un convertisseur à découpage de type SEPIC boosté en soi connu dans l'art. Alors que le convertisseur de type SEPIC permet d'abaisser ou d'augmenter la tension d'entrée, le convertisseur de type SEPIC boosté l'augmente. Le montage correspondant comprend le montage SEPIC de la figure 2 et les nœuds N1', N2', N3' correspondent aux nœuds N1, N2 et N3 de la figure 2. Le montage comprend et comprend en outre un quatrième nœud N4' situé entre la deuxième inductance L2 et la masse, ainsi qu'une deuxième diode D2 dont l'anode est connectée au premier nœud N1' et la cathode est reliée au quatrième nœud N4', ainsi qu'une troisième capacité C3 reliant le nœud N4' à la masse et connectée à l'inductance L3. Le fonctionnement du montage de la figure 3 est en soi connu dans l'art et ne sera pas décrit en détails dans le cadre de la description de la présente invention. Le rapport cyclique de fermeture de l'interrupteur Q1 influe sur la valeur de la tension de sortie V_{OUT}. En variant la fréquence et les durées des phases d'ouverture/fermeture du signal de commande de l'interrupteur Q1, il est possible de varier la valeur de la tension de sortie. De manière générale, la valeur de tension de sortie est une fonction du rapport cyclique de fermeture D de l'interrupteur Q1: V_{OUT} = V_{IN} (1+D)/(1-D). Pour D=0.2 et V_{IN}=20V, V_{OUT} est égale à 30V. Pour D=0.9 et V_{IN}=6V, V_{OUT} est égale à 114V. Des valeurs intermédiaires entre ses valeurs extrêmes sont également réalisables.

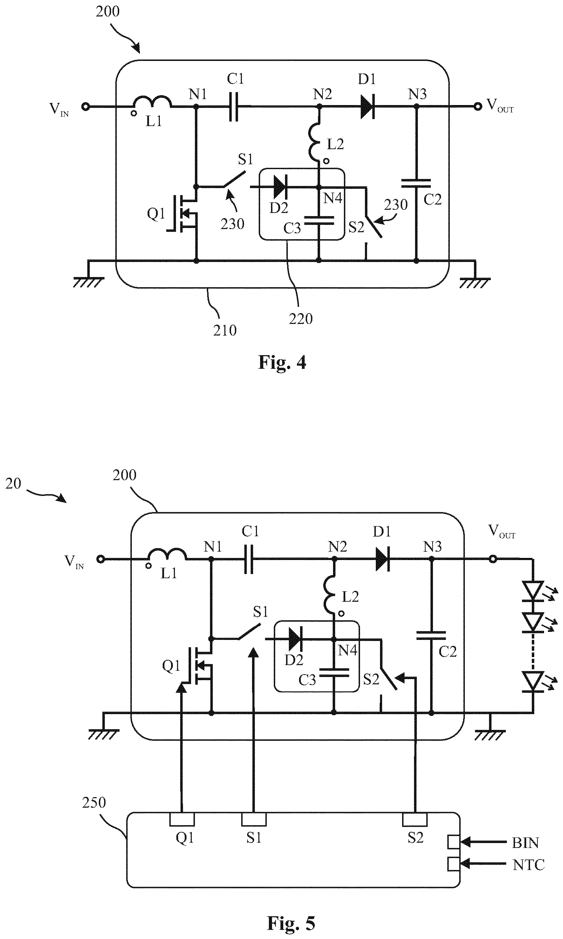

La figure 4 montre un deuxième mode de réalisation du convertisseur 200 selon l'invention, en s'appuyant de manière exemplaire et non-limitative sur les montages introduits par les figures 2 et 3 respectivement. Le convertisseur 200 comprend un premier circuit électronique 210 qui réalise un premier circuit convertisseur de type SEPIC tel qu'il a été décrit précédemment, apte à convertir la tension électrique d'entrée V_{IN} en une tension de sortie V_{OUT}(210), différente de V_{IN}. Les composants électroniques et les nœuds de connexion N1-N3 sont repris par analogie au montage de la figure 2. La tension de sortie est en plus une fonction du rapport cyclique de fermeture de l'interrupteur Q1. Le convertisseur 200 comprend également un deuxième ensemble de composants électroniques 220, composé de la deuxième diode D2 et de la troisième capacité C3, ainsi qu'un montage de sélection 230 comprenant de manière non-limitative deux interrupteurs S1 et S2. La commande du montage de sélection permet de basculer entre l'utilisation du premier circuit électronique 210 de type SEPIC, et du deuxième circuit électronique de type SEPIC boosté, réalisé par la combinaison du premier circuit électronique 210 avec les composants électroniques 220. En effet, cette combinaison résulte en un deuxième circuit électronique 210,220 et correspond au montage du convertisseur de type SEPIC boosté introduit précédemment en rapport avec la figure 3.

L'interrupteur S1 du montage de sélection 230 est branché entre le nœud N1 et la diode D2. Il permet de brancher/débrancher la diode D2 du convertisseur 200. L'interrupteur S2 du montage de sélection 230 est branché entre le nœud N4, lui situé entre l'inductance L2 et la capacité C3, et la masse, en parallèle avec la capacité C3. Il permet de court-circuiter les terminaux de la capacité C3 du convertisseur 200.

Lorsque S1 est ouvert et S2 est fermé, la diode D2 est débranchée du convertisseur et la capacité C3 est court-circuitée. Donc les composants électroniques 220 ne font pas partie du convertisseur 200, qui correspond à un premier circuit électronique 210 de type SEPIC et qui fonctionne comme décrit précédemment. Lorsque S1 est fermé alors que S2 est ouvert, la diode D2 est branchée entre le nœud N1 et le nœud N4 et la capacité C3 n'est plus court-circuitée. Donc les composants électroniques 220 font fonctionnellement partie du convertisseur 200, qui correspond dans ce cas à un deuxième circuit électronique de type SEPIC boosté 210,220 et fonctionne comme décrit précédemment. En commandant l'état du montage de sélection 230, le convertisseur montré est donc apte à combiner le fonctionnement du convertisseur de type SEPIC avec celui du convertisseur de type SEPIC boosté, sans pour autant dédoubler le nombre de composants électroniques requis pour la réalisation des deux architectures. En reprenant les valeurs exemplaires et non-limitatives utilisées précédemment, le convertisseur 200 est apte à générer, à partir d'une tension d'entrée située entre 6V et 20V, des tensions de sorties comprises entre 5V et 114V.

La figure 5 montre un dispositif de pilotage 20 de l'alimentation électrique d'une pluralité de sources lumineuses branchées en charge d'un convertisseur 200 tel qu'il vient d'être décrit. A titre exemplaire, les sources lumineuses sont illustrées comme étant des diodes électroluminescentes, LED. Une unité de commande 250 du dispositif de pilotage 20 est configurée pour commander le montage de sélection 230 du convertisseur 200 moyennant les signaux de commande S1, S2, conformément à la description qui vient d'être donnée, afin de basculer de manière sélective entre le premier circuit électronique 210 et le deuxième circuit électronique 210,220 respectivement. Dans l'exemple illustré, l'unité de commande est également configurée pour commander l'interrupteur de découpage Q1 commun aux premier et deuxième circuits électroniques du convertisseur. Ainsi, l'unité de commande, qui peut par exemple recevoir une consigne de fonctionnement des LEDs depuis une unité centrale d'un véhicule automobile, est apte à commander le convertisseur 200 de sorte à ce qu'il fournisse le niveau de tension électrique nécessaire pour réaliser ladite consigne. De manière avantageuse, l'unité de commande 250 considère également des valeurs intrinsèques des source lumineuses, par exemple l'information BIN décrivant le courant direct requis par les LEDs, ainsi que des paramètres de fonctionnement, comme par exemple une valeur de température NTC représentative de la température de jonction semiconductrice des LEDs, dont leur courant direct dépend. L'unité de commande 250 peut à titre exemplaire et non-limitatif être réalisée par un élément microcontrôleur programmé de manière à réaliser les signaux de commande Q1, S1 et S2. L'homme du métier sera capable d'implémenter un programme pour commander les convertisseurs 100, 200 selon l'invention en considérant la description fonctionnelle qui vient d'être donnée et en mettant en œuvre ses connaissances générales dans ce domaine.

## Revendications

1. Convertisseur (100, 200) destiné à convertir une tension électrique d'entrée de manière sélective en au moins une première et une deuxième tension électrique de sortie différentes, le convertisseur (100, 200) comprenant un montage de sélection (130, 230) configuré pour basculer entre l'utilisation d'un premier (110, 210) et d'au moins un deuxième (110,120 ; 210,220) circuit électronique, les premier et deuxième circuits électroniques permettant de fournir respectivement la première et deuxième tension électrique de sortie, le premier circuit électronique (210) comprenant un terminal d'entrée, une première inductance (L1) reliant le terminal d'entrée à un premier nœud (N1), une première capacité (C1) dont les terminaux relient le premier nœud (N1) à un deuxième nœud (N2), une première diode (D1) dont l'anode est connectée au deuxième nœud (N2) et la cathode est reliée à un troisième nœud (N3), le troisième nœud (N3) étant relié à un terminal de sortie du convertisseur (100, 200), un premier interrupteur (Q1) reliant le premier nœud (N1) à la masse, une deuxième inductance (L2) reliant le deuxième nœud (N2) à la masse via le montage de sélection, et une deuxième capacité (C2) reliant le troisième nœud (N3) à la masse, **caractérisé en ce que** le deuxième circuit électronique (210,220) comprend le premier circuit électronique, et comprenant en outre un quatrième nœud (N4) situé entre la deuxième inductance (L2) et la masse, ainsi qu'une deuxième diode (D2) dont l'anode est connectée au premier nœud (N1) et la cathode est reliée au quatrième nœud (N4), ainsi qu'une troisième capacité (C3) reliant le quatrième nœud (N4) à la masse.

2. Convertisseur (100, 200) selon la revendication précédente, **caractérisé en ce que** le montage de sélection (130, 230) comprend au moins un interrupteur.

3. Convertisseur (100, 200) selon l'une des revendications précédentes, **caractérisé en ce que** le premier interrupteur (Q1) est un transistor, notamment un transistor à effet de champ, dont le rapport cyclique de fermeture a un impact sur la valeur de la tension électrique de sortie du convertisseur.

4. Convertisseur selon l'une des revendications précédentes, **caractérisé en ce que** le montage de sélection (130, 230) est apte à brancher et débrancher de manière sélective la deuxième diode (D2) et à court-circuiter de manière sélective les terminaux de la troisième capacité (C3).

5. Convertisseur selon l'une des revendications précédentes, **caractérisé en ce que** le montage de sélection (130, 230) comprend un premier interrupteur de sélection S1 disposé entre le premier nœud N1 et l'anode de la deuxième diode (D2), ainsi qu'un deuxième interrupteur de sélection S2 monté en parallèle à la troisième capacité (C3) et reliant le quatrième nœud (N4) à la masse.

6. Convertisseur (100, 200) selon l'une des revendications précédentes, **caractérisé en ce que** le premier circuit électronique est apte à générer une tension de sortie comprise entre 5 et 55 V, et **en ce que** le deuxième circuit électronique est apte à générer une tension de sortie comprise entre 30 et 114 V, pour une tension d'entrée comprise entre 6 et 20 V.

7. Dispositif de pilotage de l'alimentation électrique (20) d'au moins une source lumineuse à élément semi-conducteur, **caractérisé en ce que** le dispositif comprend un convertisseur (100, 200) selon une des revendications précédentes et une unité de commande (250) configurée pour commander le montage de sélection (130, 230) du convertisseur en fonction du niveau de tension requis pour l'alimentation des sources lumineuses.

## Patentansprüche

1. Wandler (100, 200) zum selektiven Umwandeln einer elektrischen Eingangsspannung in mindestens eine erste und eine zweite unterschiedliche elektrische Ausgangsspannung, der Wandler (100, 200) eine Auswahlschaltung 130, 230) umfasst, die so konfiguriert ist, dass sie zwischen der Verwendung einer ersten (110, 210) und mindestens einer zweiten (110, 120; 210, 220) elektronischen Schaltung umschaltet, wobei die erste und die zweite elektronische Schaltung die Bereitstellung der ersten bzw. der zweiten elektrischen Ausgangsspannung ermöglichen,
mindestens einen Teil der ersten elektronischen Schaltung (110, 210) umfasst,
die erste elektronische Schaltung (210) einen Eingangsanschluss, eine erste Induktivität (L1), die den Eingangsanschluss mit einem ersten Knoten (N1) verbindet, eine erste Kapazität (C1), deren Anschlüsse den ersten Knoten (N1) mit einem zweiten Knoten (N2) verbinden, eine erste Diode (D1), deren Anode mit dem zweiten Knoten (N2) verbunden ist und deren Kathode mit dem zweiten Knoten (N2) verbunden ist, und eine zweite Induktivität (L2) umfasst, die den Eingangsanschluss mit einem zweiten Knoten (N2) verbindet.
die mit einem dritten Knoten (N3) verbunden ist, wobei der dritte Knoten (N3) mit einem Ausgangsanschluss des Wandlers (100, 200) verbunden ist, einen ersten Schalter (Q1), der den ersten Knoten (N1) mit Masse verbindet, eine zweite Induktivität (L2), die den zweiten Knoten (N2) über die Auswahlschaltung mit Masse verbindet, und eine zweite Kapazität (C2), die den dritten Knoten (N3) mit Masse verbindet,
**dadurch gekennzeichnet, dass** die zweite elektronische Schaltung (210, 220) die erste elektronische Schaltung umfasst, und
ferner umfassend einen vierten Knoten (N4), der sich zwischen der zweiten Induktivität (L2) und Masse befindet, eine zweite Diode (D2), deren Anode mit dem ersten Knoten (N1) verbunden ist und deren Kathode mit dem vierten Knoten (N4) verbunden ist, sowie eine dritte Kapazität (C3), die den vierten Knoten (N4) mit Masse verbindet.

2. Konverter (100, 200) nach dem vorhergehenden Anspruch, **dadurch gekennzeichnet, dass** die Auswahlschaltung (130, 230) mindestens einen Schalter umfasst.

3. Konverter (100, 200) nach einem der vorhergehenden Ansprüche, **dadurch gekennzeichnet, dass**
der erste Schalter (Q1) ein Transistor, insbesondere ein Feldeffekttransistor, ist, dessen Einschalt-Tastverhältnis sich auf den Wert der elektrischen Ausgangsspannung des Konverters .

4. Konverter nach einem der vorhergehenden Ansprüche, **dadurch gekennzeichnet, dass** die Montage Auswahlsystem (130, 230) geeignet ist, die zweite Diode (D2) selektiv einzuschalten und auszuschalten und die Anschlüsse der dritten Kapazität (C3) selektiv kurzzuschließen.

5. Konverter nach einem der vorhergehenden Ansprüche, **dadurch gekennzeichnet, dass** die Auswahlschaltung (130, 230) einen ersten Auswahlschalter S1, der zwischen dem ersten Knoten N1 und der Anode der zweiten Diode (D2) angeordnet ist, einen zweiten Schalter Auswahlspeicher S2, der parallel zur dritten Kapazität (C3) geschaltet ist und den vierten Knoten (N4) mit Masse verbindet.

6. Konverter (100, 200) nach einem der vorhergehenden Ansprüche, **dadurch gekennzeichnet**, die erste elektronische Schaltung in der Lage ist, eine Ausgangsspannung zwischen 5 und
55 V, und dass die zweite elektronische Schaltung dazu geeignet ist, bei einer Eingangsspannung von 6 bis 20 V eine Ausgangsspannung von 30 bis 114 V zu erzeugen.

7. Vorrichtung zur Steuerung Stromversorgung (20) mindestens einer Lichtquelle mit Halbleiterelement, **dadurch gekennzeichnet, dass** die Vorrichtung einen Konverter umfasst
(100, 200) nach einem der vorhergehenden Ansprüche und eine Steuereinheit (250), die so konfiguriert ist, dass sie die Auswahlschaltung (130, 230) des Konverters in Abhängigkeit von dem für die Versorgung der Lichtquellen erforderlichen Spannungspegel steuert.

## Claims

1. A converter (100, 200) for selectively converting an input voltage into at least first and second different output voltages,
the converter (100, 200) comprising a selection circuit (130, 230) configured to switch between using a first (110, 210) and at least a second (110, 120; 210, 220) electronic circuit, the first and second electronic circuits enabling the first and second electrical output voltages to be supplied respectively,
comprises at least part of the first electronic circuit (110, 210),
the first electronic circuit (210) comprising an input terminal, a first inductor (L1) connecting the input terminal to a first node (N1), a first capacitor (C1), the terminals of which connect the first node (N1) to a second node (N2), a first diode (D1), the anode of which is connected to the second node (N2) and the cathode of which is connected to the first node (N1), a second inductor (D2), the terminals of which connect the first node (N1) to the second node (N2) and the cathode of which is connected to the second node (N2). connected to a third node (N3), the third node (N3) being connected to an output terminal of the converter (100, 200), a first switch (Q1) connecting the first node (N1) earth, a second inductor (L2) connecting the second node (N2) to earth via the selection circuit, and a second capacitor (C2) connecting the third node (N3) to earth,
**characterised in that** the second electronic circuit (210, 220) comprises the first electronic circuit, and
further comprising a fourth node (N4) located between the second inductor (L2) and earth, a second diode (D2) whose anode is connected to the first node (N1) and whose cathode is connected to the fourth node (N4), and a third capacitor (C3) connecting the fourth node (N4) to earth.

2. A converter (100, 200) according to the preceding claim, **characterised in** the selection circuit (130, 230) comprises at least one switch.

3. Converter (100, 200) according one of the preceding claims, **characterised in that** the first switch (Q1) is a transistor, in particular a field effect transistor, whose cycle has an impact on the value of the electrical output voltage of the converter.

4. Converter according to one of the preceding claims, **characterised in that** the assembly selection switch (130, 230) is able to selectively connect and disconnect the second diode (D2) and selectively short-circuit the terminals of the third capacitor (C3).

5. converter according to one of the preceding claims, **characterised in that** the selection circuit (130, 230) comprises a first selection switch S1 disposed between the first node N1 and the anode of the second diode (D2), a second selection switch S1 disposed between the first node N1 and the anode of the second diode (D2).
selection switch S2 connected in parallel with the third capacitor (C3) and connecting the fourth node (N4) to earth.

6. Converter (100, 200) according to one of the preceding claims, **characterised in** the first electronic circuit is capable of generating an output voltage of between 5 and
55 V, and **in that** the second electronic circuit is able to generate an output voltage of between 30 and 114 V, for an input voltage of between 6 and 20 V.

7. Device for controlling the power supply (20) to at least one light source having a semiconductor element, **characterised in that** the device comprises a converter. (100, 200) according to one of the preceding claims and a control unit (250) configured to control the selection circuit (130, 230) of the converter as a function of the voltage level required to supply the light sources.
